# EUROPÄISCHE PATENTSCHRIFT

(11) **EP 0 455 020 B1**
(45) Veröffentlichungstag und Bekanntmachung des Hinweises auf die Patenterteilung: **16.08.1995**
(21) Anmeldenummer: 91105814.7
(22) Anmeldetag: 12.04.1991
(51) Int. Cl.: G02F 1/01, G02F 1/17

(54) **Optischer Modulator**
Optical modulator
Modulateur optique

(30) Priorität: 02.05.1990 DE 4014033
(43) Veröffentlichungstag der Anmeldung: 06.11.1991
(73) Patentinhaber: Alcatel SEL Aktiengesellschaft, D-70435 Stuttgart (DE); ALCATEL N.V., NL-1077 XX Amsterdam (NL)
(72) Erfinder: Kersten, Peter, Dr., W-7250 Leonberg (DE); Lauckner, Joachim, W-7015 Korntal-M.1 (DE); Hanisch, Helmut, W-7440 Nürtingen (DE)
(74) Vertreter: Pohl, Herbert, Dipl.-Ing.

(56) Entgegenhaltungen:
- EP-A- 0 021 967
- SPIE, vol. 971 "Nonlinear Optical Properties Of Organic Materials" 1988 Seiten 219-229; R. LYTEL et al.: "Organic electro-optic waveguide modulators and switches"
- BRITISH TELECOM TECHNOL JOURNAL Bd. 6, Nr. 3, Juli 1988, Seiten 5-17; P. PANTELIS et al.: "Organic polymer films for nonlinear optics"
- SPIE, vol. 824 "Advances in Nonlinear Polymers and Inorganic Crystals, Liquid Crystals and Laser Media" 1987 Seiten 152-161; R. LYTEL et al.: " Advances in organic electro-optic devices"
- PATENT ABSTRACTS OF JAPAN, vol. 11, no. 216 (P-595) 14 Juli 1987 ; & JP-A-62 034 123

## Beschreibung

Die Erfindung betrifft einen optischen Modulator gemäß dem Oberbegriff des Patentanspruchs 1 sowie ein Herstellungsverfahren für einen solchen Modulator gemäß Anspruch 5.

Ein derartiger Modulator ist z.B. aus der Europäischen Patentanmeldung 0 021 967 A1 bekannt. Als Polymer wird dort ein optisch nicht lineares, transparentes Material verwendet, welches durch Polarisation in einem elektrischen Feld elektrisch beeinflußbare, doppelbrechende Eigenschaften eingeprägt bekommt.

Die Herstellung derartiger Modulatoren ist relativ aufwendig.

Es ist daher Aufgabe der Erfindung, einen optischen Modulator sowie ein Verfahren zu dessen Herstellung zu schaffen, wobei der Modulator einfach aufgebaut und daher kostengünstig herstellbar ist.

Diese Aufgabe wird durch einen Modulator gelöst, der die in Anspruch 1 genannten Merkmale aufweist. Der Modulator zeichnet sich durch drei übereinanderliegende Schichten auf einem Substrat aus. Unmittelbar auf dem Substrat liegt eine erste leitfähige Schicht, die eine erste Elektrode bildet. Zumindest ein Teilbereich der Oberfläche dieser Elektrode ist mit einer Polymerschicht überdeckt, die ihrerseits von einer zweiten Elektrode aus leitfähigem Material überlagert wird. Die beiden Elektroden sind gegeneinander isoliert. Die drei Schichten, die beiden Elektroden mit der dazwischenliegenden Polymerschicht, lassen sich sehr einfach auf ein Substrat aufbringen. Ein derartig aufgebauter Modulator hat außerdem noch den Vorteil, daß er sich durch Schaltgeschwindigkeiten mit Ansprechzeiten von << 1 »s auszeichnet.

Bei einem bevorzugten Ausführungsbeispiel des Modulators enthält die Polymerschicht einen Farbstoff mit konjungierten Doppelbindungen, die zu delokalisierten elektronischen Zuständen im Farbstoffmolekül führen. Darüber hinaus kann das Farbstoffmolekül Donator- und Akzeptorengruppen enthalten, die die Symmetrie des Moleküls reduzieren und ihm ein Dipolmoment vermitteln. Eine Polymerschicht mit diesen Eigenschaften ist einfach herzustellen und kann von einer an die Elektroden angelegten Spannung beeinflußt werden.

Besonders bevorzugt wird ein optischer Modulator, bei dem zur Bildung einzelner Modulatorelemente mehrere erste Elektroden auf einem Substrat vorgesehen sind, die mit einer Polymerschicht zumindest teilweise abgedeckt sind. Zumindest Teilbereiche der Polymerschicht sind von einer gegenüber der ersten Elektrode isolierten zweiten Elektrode überlagert. Auf diese Weise wird eine Integration mehrerer Modulatorelemente auf einem Substrat realisiert. Dadurch können auch Modulator-Zeilen beziehungsweise -Matrizen geschaffen werden.

Der Lösung dieser Aufgabe dient überdies ein Verfahren mit den in Anspruch 5 aufgeführten Merkmalen. Mit Hilfe dieses Verfahrens wird auf ein Substrat zunächst eine erste Elektrode wenigstens auf Teilbereiche des Substrats aufgebracht. Auf dieser wird, zumindest wieder in einem Teilbereich, ein Polymer aufgebracht, das seinerseits von einer zweiten Elektrode überlagert wird, die wenigstens einen Teilbereich des Polymers abdeckt und gegenüber der ersten Elektrode isoliert ist.

Bevorzugt wird eine Ausführungsform des Verfahrens, bei der der Modulator bei einer erhöhten Temperatur getempert wird, um die zwischen den Elektroden liegende Polymerschicht zu trocknen. Vorzugsweise wird dabei und insbesondere bei der Abkühlung des Modulators eine elektrische Spannung an die Elektroden angelegt. Dadurch wird eine die Effektivität des Materials steigernde Ausrichtung der Farbstoffmoleküle der Polymerschicht erreicht. Es ist erkennbar, daß sowohl das Aufbringen der einzelnen Schichten als auch die Ausrichtung der Farbstoffmoleküle dabei sehr einfach erreicht werden kann, wodurch das Herstellungsverfahren einfach und kostengünstig durchführbar ist.

Weitere Vorteile des Modulators und des Herstellungsverfahrens ergeben sich aus den übrigen Unteransprüchen.

Die Erfindung wird im folgenden anhand der Figuren näher erläutert. Es zeigen:
- Fig. 1: eine Draufsicht auf einen optischen Modulator;
- Fig. 2: einen Schnitt entlang der in Fig. 1 eingezeichneten Linie II-II durch den Modulator;
- Fig. 3: eine Draufsicht auf einen mehrere Modulatorelemente aufweisenden optischen Modulator und
- Fig. 4: eine Prinzipskizze zur Messung der optischen Modulation des Bauteils gemäß Fig. 1 und 2.

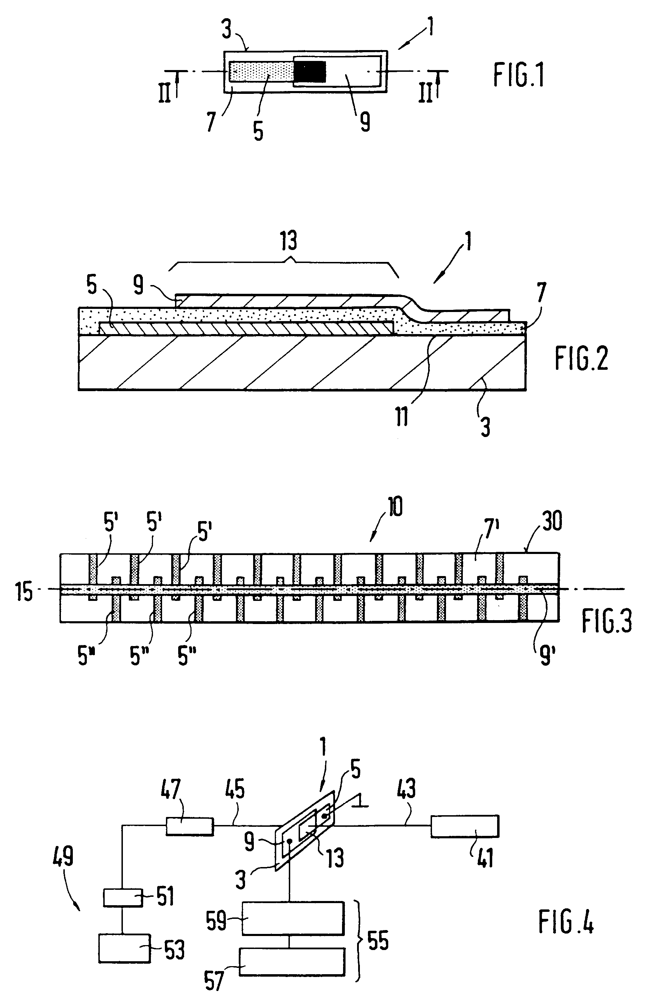

Die Draufsicht gemäß Fig. 1 zeigt einen im wesentlichen rechteckförmigen Modulator 1. Auf ein Substrat 3 ist eine erste Elektrode 5 aufgebracht, die ihrerseits rechteckförmig ausgebildet ist. Sie erstreckt sich sowohl in der Breite als auch in der Länge des Substrats 3 lediglich über einen Teilbereich desselben. Es handelt sich hier um eine transparente, leitfähige Elektrode aus ITO (Indium-Zinn-Oxid), die in Dünnschichttechnik aufgebracht wird.

Über das gesamte Substrat ist anschließend durch ein Schleuderverfahren eine Polymerschicht 7 aufgebracht, deren Dicke vorzugsweise einige Mikrometer, beispielsweise 1,5 »m beträgt. Diese Schicht ist besonders einfach aufzubringen, wenn die gesamte Oberfläche des Substrats beschichtet wird. Es genügt jedoch, wenn ein Teilbereich der ersten Elektrode 5 mit dem Polymer beschichtet wird.

Als Polymer kann beispielsweise PMMA verwendet werden, in dem ein spezieller Farbstoff (z.B. das aus der Literatur bekannte DANS, Dimethyl-Aminonitrostilben) enthalten ist. Der Farbstoff zeichnet sich dadurch aus, daß er konjugierte Doppelbindungen enthält, die zu delokalisierten elektronischen Zuständen im Farbstoffmolekül führen. Überdies soll das Farbstoffmolekül Donator- und Akzeptorgruppen enthalten, die die Symmetrie des Moleküls reduzieren und ihm ein Dipolmoment vermitteln. Dadurch können die Moleküle in einem elektrischen Feld zwischen den Elektroden ausgerichtet werden, wie unten beschrieben wird. Hier wurde beispielsweise ein Polymer gewählt, das ein dem DANS verwandtes Chromophor enthält, das an die Ketten des Polymers (PMMA) gebunden ist.

Die Polymerschicht wird nach dem Aufschleudern getrocknet und durch Aufdampfen mit einer dünnen leitenden Schicht, die die zweite Elektrode bildet, versehen. Die zweite Elektrode kann beispielsweise aus einer 200 nm dicken Goldschicht bestehen.

Bei dem in Fig. 1 dargestellten Ausführungsbeipiel ist die zweite Elektrode 9 im wesentlichen rechteckförmig ausgebildet, jedoch schmaler und kürzer als das Substrat 3. Die zweite Elektrode 9 ist so lang ausgebildet, daß sie, ausgehend vom rechten Randbereich des Substrats 3 in Fig. 1, einen Teilbereich der ersten Elektrode 5 überdeckt, die vom linken Rand in Fig. 1 ausgeht.

Grundsätzlich würde es jedoch genügen, wenn die zweite Elektrode lediglich einen Bereich der Polymerschicht 7 überdeckte, der auf der ersten Elektrode 5 angeordnet ist. Die erste Elektrode 5 und die zweite Elektrode 9 sind so angeordnet, daß sich beide, beispielsweise mit einem silberhaltigen Kleber, kontaktieren lassen. Die Anschlußdrähte der Elektroden sind zur Verbesserung der Übersichtlichkeit der Darstellung hier nicht eingezeichnet.

Die anhand von Fig. 1 erläuterte Polymerschicht ist deutlicher in der Querschnittsdarstellung gemäß Fig. 2 erkennbar, in der gleiche Teile mit gleichen Bezugszeichen versehen sind.

Fig. 2 zeigt noch einmal das Substrat 3, auf dessen Oberseite, links, die erste Elektrode 5 aufgebracht ist. Diese wird, ebenso wie der zunächst freigebliebene Bereich 11 der Oberseite des Substrats 3, von der Polymerschicht 7 überdeckt. Der in Substratmitte gelegene Bereich der ersten Elektrode wird von der zweiten Elektrode 9 überlagert, die sich etwa bis zum rechten Rand des Substrats 3 erstreckt. Die erste Elektrode 5 ist gegenüber der zweiten Elektrode 9 durch die Polymerschicht isoliert. Der Bereich, in dem sich die erste und zweite Elektrode überdecken, ist durch eine Klammer gekennzeichnet, es handelt sich um den "aktiven Bereich" 13 des optischen Modulators 1.

Aus dieser Darstellung ist ersichtlich, daß die erste und zweite Elektrode ohne Beeinträchtigung des "aktiven Bereichs" 13 kontaktiert werden können. Grundsätzlich ist es auch möglich, eine leitende Schicht als zweite Elektrode 9 lediglich im Bereich der ersten Elektrode vorzusehen. Durch die Kontaktierung einer derartigen zweiten Elektrode wird dann jedoch der "aktive Bereich" verkleinert.

Fig. 3 zeigt eine Draufsicht auf eine Zeile mit mehreren Modulatorelementen, die auf einem Substrat 30 angeordnet sind. Aus dieser Darstellung ist ersichtlich, daß mehrere Elemente zu einem optischen Modulator 10 integriert werden können. Bei der Darstellung gemäß Fig. 3 sind mehrere vom oberen Rand des Substrats 30 ausgehende erste Elektroden 5' vorgesehen, die in einem Abstand zueinander angeordnet sind. In den Freiraum zwischen je zwei Elektroden 5' ragen vom unteren Rand des Substrats 30 aus jeweils weitere erste Elektroden 5''.

Die Länge der Elektroden ist so gewählt, daß sie über eine gedachte Mittelachse 15 des Substrats 30 hinausragen.

Die gesamte Oberfläche des Substrats 30, zumindest die im Bereich der Mittelachse 15 liegenden Bereiche der ersten Elektroden 5' sowie 5'', wird mit einem Polymer beschichtet, wie es bei der Beschreibung der Fig. 1 und 2 erwähnt wurde.

Anschließend werden die im Bereich der Mittelachse 15 liegenden Teilbereiche der ersten Elektroden 5' und 5'', zumindest die Bereiche der Elektroden, die mit dem Polymer beschichtet sind, mit einer zweiten Elektrode 9' beschichtet, die im wesentlichen parallel zur Mittelachse 15 des Substrats 30 verläuft und allen ersten Elektroden zugeordnet ist. Die zweite Elektrode 9' ist hier durchgehend ausgebildet, so daß für alle Modulatorelemente, die jeweils eine erste Elektrode 5' bzw. eine erste Elektrode 5'' umfassen, eine gemeinsame zweite Elektrode 9' vorgesehen werden kann, wodurch die Kontaktierung sehr vereinfacht wird.

Auch bei dem in Fig. 3 dargestellten Ausführungsbeispiel sind die ersten Elektroden in Dünnschichttechnik aufgebracht. Zur Beschichtung der Oberfläche des Substrats mit einer Polymerschicht wird wiederum ein Schleuderverfahren bevorzugt. Nach dem Trocknen der Polymerschicht wird die zweite Elektrode beispielsweise durch Aufdampfen einer dünnen Goldschicht hergestellt. Auch hier sind die erste Elektrode 5' bzw. 5'', die wiederum aus ITO besteht, und die zweite Elektrode so angeordnet, daß sie sich, beispielsweise mit silberhaltigem Kleber, kontaktieren lassen.

Mit Hilfe des in Fig. 3 dargestellten Aufbaus kann eine Integration der Modulatorelemente erfolgen. Auch lassen sich räumliche optische Schaltungen realisieren.

Bei dem Herstellungsverfahren eines optischen Modulators gemäß den Fig. 1 und 2 oder nach Fig. 3 werden die mit Elektroden versehenen Bauelemente bei erhöhter Temperatur, beispielsweise bei 140°C getempert. Dabei wird sowohl an die erste Elektrode 5, bzw. die erste Elektrode 5' und 5'', als auch an die zweite Elektrode 9 bzw. 9' eine elektrische Spannung von beispielsweise 100 V je »m Polymerschichtdicke angelegt. Nach einer vorbestimmten Zeit von beispielsweise 10 Minuten wird der Modulator auf Umgebungstemperatur abgekühlt, wobei die elektrische Spannung an den Elektroden aufrechterhalten wird.

Mit Hilfe dieses Verfahrens ist es möglich, den in der Polymerschicht vorhandenen Farbstoffmolekülen eine spezielle Ausrichtung zu geben.

Fig. 4 zeigt einen Meßaufbau, mit der das Verhalten des optischen Modulators nachweisbar ist.

Der aktive Bereich 13 eines optischen Modulators 1 wird mit einer geeigneten Lichtquelle 41 bestrahlt. Hier wurde ein HeNe-Laser mit einer Wellenlänge von 633 nm verwendet. Der Lichtstrahl 43 der Lichtquelle 41 trifft im wesentlichen senkrecht auf den aktiven Bereich 13 des optischen Modulators 1 auf und durchdringt diesen. Dies wird dadurch erreicht, daß die Wellenlänge der Lichtquelle im Bereich des Ausläufers der Absorptionskante des Polymers liegt.

Die Intensität des den Modulator 1 durchdringenden Lichtstrahls 45 wird mit einem geeigneten Detektor 47, hier einer Si-Diode gemessen, die an eine Auswertungsschaltung 49 angeschlossen ist. Diese umfaßt hier einen Stromverstärker 51 sowie einen Oszillografen 53.

Der optische Modulator 1 ist an eine Modulatorschaltung 55 angeschlossen, die hier einen Funktionsgenerator 57 sowie einen Verstärker 59 aufweist. Eine Elektrode des optischen Modulators, hier die zweite Elektrode 9, ist an den Ausgang des Verstärkers 59, die andere Elektrode, hier die erste Elektrode 3 des optischen Modulators 1, an Masse angeschlossen.

Mit dem Oszillografen 53 wird die Intensität des den Modulator 1 durchstrahlenden Lichts gemessen. Dabei kann die Intensität in Abhängigkeit von der Modulationsspannung aufgezeichnet werden, die an die zweite Elektrode 9 von der Modulatorschaltung 5 gelegt wird.

Der durch den Modulator tretende Lichtstrahl 45 könnte bei dem anhand der Fig. 1 bis 3 erläuterten Aufbau mit einer Modulationsspannung beaufschlagt werden, die im Frequenzbereich von 0 bis oberhalb 1 GHz liegt.

Aus Fig. 1 ist ohne weiteres ersichtlich, daß auch Modulatoren mit einem Aufbau gemäß Fig. 3 in einer Meßschaltung gemäß Fig. 4 verwendet werden können. Dabei soll die vom Verstärker 59 ausgehende Spannung an die zweite Elektrode 9' angelegt werden, während die erste Elektrode 5' bzw. 5'' an Masse liegt.

Bei geringen Schichtdicken sind prinzipiell hohe Auflösungen von wenigen »m erreichbar. Eine Grenze für die Auflösung ergibt sich aus der erforderlichen Ansteuerspannung, die von der Modulatorschaltung 55 an den Modulator 10 bzw. 1 gelegt wird und durch die Durchbruchsfeldstärke der Polymerschicht 7.

Die Modulation der Intensität des durchtretenden Lichtstrahls 45 kann durch die Wahl der Farbstoffe und eine Anpassung der Wellenlängen des Lichtstrahls 43 der Lichtquelle 41 beeinflußt werden.

## Patentansprüche

1. Optischer Modulator mit mindestens einer auf einem Substrat aufgebrachten ersten Elektrode (5, 5', 5''), einer zumindest einen Teilbereich der ersten Elektrode überdeckenden Polymerschicht (7, 7') und mindestens einer, gegenüber der ersten Elektrode isolierten zweiten Elektrode (9, 9'), die den von der Polymerschicht bedeckten Teilbereich der ersten Elektrode zumindest teilweise überlagert und transparent ist, **dadurch gekennzeichnet,** daß die Polymerschicht (7, 7') einen Farbstoff mit konjugierten Doppelbindungen enthält und/oder Farbstoffmoleküle mit Donator- und Akzeptorgruppen aufweist.

2. Modulator nach Anspruch 1, dadurch gekennzeichnet, daß die erste Elektrode (5, 5', 5'') im wesentlichen aus in Dünnschichttechnik aufgebrachtem ITO (Indium-Zinn-Oxyd) besteht.

3. Modulator nach Anspruch 1 oder 2, dadurch gekennzeichnet, daß die zweite Elektrode (9, 9') aus einer aufgedampften Goldschicht besteht.

4. Anordnung mit mehreren Modulatoren nach einem der vorstehenden Ansprüche, dadurch gekennzeichnet, daß mehrere erste Elektroden (5', 5'') auf einem Substrat (30) vorgesehen sind, die mit der Polymerschicht (7') zumindest teilweise abgedeckt sind, und daß zumindest Teilbereiche der Polymerschicht von einer gegenüber den ersten Elektroden isolierten zweiten Elektrode (9') überlagert sind.

5. Verfahren zur Herstellung eines optischen Modulators gemäß einem der Ansprüche 1 bis 3, gekennzeichnet durch folgende Schritte:
- Aufbringen mindestens einer ersten Elektrode (5, 5', 5'') auf mindestens einen Teilbereich des Substrates (3, 30),
- Aufbringen des Polymers zumindest auf einen Teilbereich der ersten Elektrode und
- Aufbringen mindestens einer gegenüber der ersten Elektrode isolierten zweiten Elektrode (9') zumindest auf Teilbereiche der Polymerschicht.

6. Verfahren nach Anspruch 5, dadurch gekennzeichnet, daß die erste Elektrode mit Hilfe von Dünnschichttechnik aufgebracht wird.

7. Verfahren nach Anspruch 5 oder 6, dadurch gekennzeichnet, daß die Polymerschicht durch ein Schleuderverfahren aufgebracht wird.

8. Verfahren nach einem der Ansprüche 5 bis 7, dadurch gekennzeichnet, daß die zweite Elektrode (9, 9') durch Aufdampfen aufgetragen wird.

9. Verfahren nach einem der Ansprüche 5 bis 8, dadurch gekennzeichnet, daß der Modulator bei erhöhter Temperatur getempert wird.

10. Verfahren nach Anspruch 9, dadurch gekennzeichnet, daß während des Temperns und/oder während der Abkühlung des Modulators eine Spannung an den Elektroden anliegt.

## Claims

1. Optical modulator having at least one first electrode (5, 5', 5'') applied to a substrate, a polymer layer (7, 7') covering at least a part area of the first electrode and at least one second electrode (9, 9') which is insulated with respect to the first electrode, which overlays at least partially the part area of the first electrode covered by the polymer layer and which is transparent, characterized in that the polymer layer (7, 7') contains a dye with conjugate double bonds and/or comprises dye molecules with donor and acceptor groups.

2. Modulator according to Claim 1, characterized in that the first electrode (5, 5', 5'') consists substantially of ITO (indium tin oxide) applied by the thin-layer technique.

3. Modulator according to Claim 1 or 2, characterized in that the second electrode (9, 9') consists of a vapour-deposited layer of gold.

4. Arrangement comprising a plurality of modulators according to any one of the preceding claims, characterized in that a plurality of first electrodes (5', 5'') which are covered at least partially with the polymer layer (7') is provided on a substrate (30); and in that at least part areas of the polymer layer are overlaid by a second electrode (9') which is insulated with respect to the first electrodes.

5. Method of producing an optical modulator according to any one of Claims 1 to 3, characterized by the following steps:
- applying at least one first electrode (5, 5', 5'') to at least a part area of the substrate (3, 30);
- applying the polymer at least to a part area of the first electrode; and
- applying at least one second electrode (9') which is insulated with respect to the first electrode at least to part areas of the polymer layer.

6. Method according to Claim 5, characterized in that the first electrode is applied by the thin-layer technique.

7. Method according to Claim 5 or 6, characterized in that the polymer layer is applied by a centrifuging process.

8. Method according to any one of Claims 5 to 7, characterized in that the second electrode (9, 9') is applied by vapour-deposition.

9. Method according to any one of Claims 5 to 8, characterized in that the modulator is tempered at a high temperature.

10. Method according to Claim 9, characterized in that a voltage is applied to the electrodes whilst the modulator is being tempered and/or is cooling down.

## Revendications

1. Modulateur optique avec au moins une première électrode (5, 5' 5'') appliquée sur un substrat, une couche polymère (7, 7') recouvrant au moins une zone partielle de la première électrode et au moins une deuxième électrode (9, 9'), isolée par rapport à la première électrode, qui recouvre, au moins partiellement, la zone partielle, recouverte de la couche polymère, de la première électrode et qui est transparente, caractérisé en ce que la couche polymère (7, 7') contient un pigment avec des liaisons doubles conjuguées et/ou présente des molécules de pigment avec des groupes donneurs et accepteurs.

2. Modulateur selon la revendication 1, caractérisé en ce que la première électrode (5, 5', 5'') se compose pour l'essentiel d'ITO (oxyde indium-étain) appliqué selon la technique des couches minces.

3. Modulateur selon la revendication 1 ou 2, caractérisé en ce que la deuxième électrode (9, 9') se compose d'une couche d'or vaporisée.

4. Dispositif avec plusieurs modulateurs selon l'une des revendications précédentes, caractérisé en ce que plusieurs premières électrodes (5', 5'') sont prévues sur un substrat (30) et sont recouvertes au moins partiellement de la couche polymère (7') et en ce que au moins des zones partielles de la couche polymère sont recouvertes d'une deuxième électrode (9') isolée par rapport aux premières électrodes.

5. Procédé de fabrication d'un modulateur optique selon l'une des revendications 1 à 3, caractérisé par les étapes suivantes :
- mise en place d'au moins une première électrode (5, 5', 5'') sur au moins une zone partielle du substrat (3, 30),
- mise en place du polymère au moins sur une zone partielle de la première électrode et
- mise en place d'au moins une deuxième électrode (9'), isolée par rapport à la première électrode, au moins sur des zones partielles de la couche polymère.

6. Procédé selon la revendication 5, caractérisé en ce que la première électrode est appliquée à l'aide de la technique des couches minces.

7. Procédé selon la revendication 5 ou 6, caractérisé en ce que la couche polymère est appliquée par un procédé de centrifugation.

8. Procédé selon l'une des revendications 5 à 7, caractérisé en ce que la deuxième électrode (9, 9') est appliquée par vaporisation.

9. Procédé selon l'une des revendications 5 à 8, caractérisé en ce que le modulateur est recuit à haute température.

10. Procédé selon la revendication 9, caractérisé en ce que, pendant le recuit et/ou pendant le refroidissement du modulateur, une tension est appliquée aux électrodes.
